# EUROPEAN PATENT APPLICATION

(11) **EP 2 555 020 A1**
(43) Date of publication of application: **06.02.2013**
(21) Application number: 11176368.6
(22) Date of filing: 03.08.2011
(51) Int. Cl.: G01V 8/16

(54) **Sensor device**

(71) Applicant: 3M Innovative Properties Company, Saint Paul, MN 55133-3427 (US)
(72) Inventor: Bake, Michael, 44879 Bochum (DE); Rudek, David, 40591 Duesseldorf (DE); Starosta, Marian, 42549 Velbert (DE)
(74) Representative: Bergen, Katja

(57) **Abstract**

Sensor device (10), comprising a light guide (20) having a light guide body (60) extending between opposed first and second end faces (80, 90), the light guide body (60) having a body surface (70) and reflecting features (100) formed in at least a portion of the light guide body (60), wherein the light guide (20) is operable to reflect, by at least one of the reflecting features (100), light in the light guide (20) through the body surface (70) to an outside of the light guide (20), and operable to reflect, by at least one of the reflecting features (100), light entering the light guide (20) through the body surface (70) towards one or both of the end faces (80, 90).. The sensor device further comprises a light source (30), operable to introduce light into the light guide (20) through the first end face (80), and a light detector (40). The light detector (40) is arranged such that it can detect light which leaves the light guide (20) through one of the first and the second end faces (80, 90) of the light guide (20).

## Description

The invention relates to sensor devices for detecting an approach, an extraction or movement of an object. In particular, the invention relates to such devices that comprise a light guide. The invention further relates to utility cabinets having such a sensor device installed therein, and to the use of such a sensor device for detecting access to an interior of a utility cabinet.

Optical devices for detecting the approach of objects have been used for many years. For example, the classical two-side light barrier device includes a light source that emits light towards a light detector, which is placed at a distance from the light source and which outputs an electrical signal in response of an amount of light detected. When an opaque object traverses the light beam between the light source and the light detector, the light detector receives less light from the light source, and therefore its output electrical signal changes. The change is detected and is used to cause an action, e.g. the opening of a gate.

While the classical two-side light barrier device is sensitive to objects interrupting the relatively fine one-dimensional beam of light between the light source and the light detector, this system was expanded to have a plurality of light sources or a plurality of light detectors, or both. In this way, an object could be detected when it crossed a sensing plane between, for example, a single light source and several light detectors arranged in a linear row or between a plurality of light sources arranged in a row and a single light detector. Other suitable arrangements of light sources and light detectors can detect objects entering a volume of space, in other words, objects entering a three-dimensional sensing space.

In order to avoid the necessity for larger numbers of light detectors or light sources, sensor devices have been developed that used a single light source and a light guide that collects light from the light source and emits it over a linear, one-dimensional light-emitting surface or, with other types of light guides, over a flat, two-dimensional light-emitting surface. This, in combination with one or more light detectors placed opposite the light-emitting surface of the light guide, allow the creation of a two-dimensional or a three-dimensional sensing space.

The German patent application DE 4113720 A1 describes a forked light barrier in which a light-emitting surface in a first part is directed at a light-receiving surface at a distance therefrom in a second part.

U.S. patent application 2002/0134924 A1 describes a light sensor in which a plate-shaped light guide takes in light emitted from a light emitter, reflects the light at a reflection portion on a part thereof, and ejects the light towards a light receiver. The light receiver and the light guide are opposed to each other with an appropriate space in between. In one embodiment described in this document, a second light guide is disposed with one plane (light receiving face) thereof opposed to the light-ejecting face of a first light guide.

The necessity for a detector, located opposite to the light-emitting surface of the light guide and at a distance from this surface, is undesirable. Rather, there is a need to provide sensor devices that do not require a separate detector to be located opposite to the light-emitting surface of the light guide and at a distance from the light-emitting surface of the light guide, whether separate from the light guide or connected to it. The present invention addresses this problem.

The present invention provides a sensor device, comprising
a) a light guide having a light guide body extending between opposed first and second end faces, the light guide body having a body surface and reflecting features formed in at least a portion of the light guide body, wherein the light guide is operable to reflect, by at least one of the reflecting features, light in the light guide through the body surface to an outside of the light guide, and operable to reflect, by at least one of the reflecting features, light entering the light guide through the body surface towards one or both of the end faces,
b) a light source, operable to introduce light into the light guide through the first end face, and
c) a light detector,
characterized in that the light detector is arranged such that it can detect light which leaves the light guide through one of the first and the second end faces of the light guide.

The light guide of the present invention can redirect light travelling longitudinally down the light guide and reflect the light radially through the body surface of the light guide from the interior of the light guide to the outside of the light guide. Similarly, light from the outside of the light guide can enter the light guide through the body surface and can then be directed longitudinally along the light guide towards one or both of the end faces of the light guide. The light entering the light guide from an outside of the light guide can include light that has been reflected off a surface of an object. For example, an object in the vicinity of the light guide may be detected by reflecting light that has been transmitted from the inside of the light guide to the outside of the light guide. Some of the transmitted light may hit the object. The object can scatter the light and some of the scattered light may then re-enter the same light guide through the body surface of the light guide. Some of the scattered light re-entering the light guide may be reflected by reflecting features in the light guide towards one or both of the end faces of the light guide. A light detector is arranged such that it can detect light which leaves the light guide through the first or the second end face of the light guide.

When the object is in a first position or orientation with respect to the light guide, the detector detects a certain amount of light, which may originate from various sources: A first amount of light hitting the detector may comprise light that was reflected to the outside of the light guide, scattered by the object, and re-entered the light guide to be reflected, by the reflecting features, towards the end face at which the detector is arranged. A second amount of light hitting the detector can comprise ambient light or light from other light sources that entered the light guide through the body surface and was reflected towards the end face at which the detector is arranged. A third amount of light hitting the detector can comprise light introduced into the light guide by the light source, which propagated longitudinally through the light guide without leaving the light guide, eventually leaving the light guide through the end face at which the detector is arranged. The light detector outputs a signal in response to the total amount of light detected, i.e. in response to at least the sum of the first, second and third amounts of light.

When the object is in a second position or orientation with respect to the light guide, the first and/or second amounts of light may be different from their respective amounts when the object was in a first orientation, because the object may reflect more or less light back in to the light guide, or it may allow more or less ambient light to enter the light guide, than it did in the first position. Hence the sum of the first, second and third amount of light may be different. A difference in the light detector signal may thus be indicative of a change in the position or orientation of the object relative to the light guide. Alternatively, the change may also be indicative of a change in ambient light.

In an environment where ambient light is kept constant, a difference in the light detector signal may indicate a change in the position or orientation of the object relative to the light guide. In the particular case that the object was far away from the light guide in a first position and is closer to the light guide in a second position, a difference in the detector signal may indicate this approach of the object to the light guide. If the ambient light is low, like, for example, in closed cabinets, the approach of an object toward the light guide may cause the first amount of light to go up and thereby cause the total amount of light hitting the detector to go up, so that a rise in the detector signal is indicative of the approach of the object.

In the sensor device according to the invention, the light guide is operable to emit light for illumination of an object, and the same light guide is operable to receive light reflected or scattered by the object. The sensor device according to the invention therefore does not require a separate counterpart detector located opposite the light-emitting surface of the light guide. Thus, the exemplary sensor device described herein can be smaller, easier to assemble and easier to install than conventional sensor devices of the prior art.

The light guide has opposed first and second end faces. In the case of a solid light guide, an end face may comprise a flat or curved or structured surface through which light can enter the light guide or leave the light guide or both. If the light guide is a hollow light guide, an end face may be an opening through which light can enter or leave the light guide or both.

A light guide body extends between the end faces. The light guide body is operable to guide light within the light guide. It comprises a material that is sufficiently transparent for the wavelength range of the light that is used for detection of an object. The body of a solid light guide comprises a solid material, whereas the body of a hollow light guide may comprise air or other gas. The light guide body may guide light by, for example, total internal reflection or by specular reflection.

The light guide body has a body surface. In the case of a solid light guide, the body surface may be the outer surface of the body material of the light guide, or it may be a coating or a layer applied to the body material of the light guide. In the case of a hollow light guide, the body surface may be the outer surface of a wall forming the hollow light guide. The light guide body of a solid or hollow light guide may comprise a skin or a cladding. The body surface of a solid or hollow light guide may be the outer surface of the skin or the cladding. In any case, the body surface is the outermost part of the light guide body and the boundary to the ambient medium outside the light guide. At least a part of the body surface can transmit light from the inside of the light guide body to the outside of the light guide body. Similarly, at least a part of the body surface can transmit light from the outside of the light guide body to the inside of the light guide body. Transmission can be achieved, for example, by the light guide body surface being transparent in at least a part of the light guide body.

The light guide body comprises reflecting features. At least one of these reflecting features is shaped and/or arranged such as to reflect light, which is in the light guide, to the outside of the light guide. At least one of these reflecting features are shaped and/or arranged to reflect light, which is introduced into the light guide through one of the end faces, to the outside of the light guide through the body surface. One, some or all reflecting features may be shaped and arranged to reflect light which enters the light guide through the body surface, towards one or both of the end faces. At least one of the reflecting features may be arranged on the body surface of the light guide body. A reflecting feature may extend towards the inside of the light guide body or towards the outside of the light guide. A reflecting feature may be arranged in the interior of the light guide body, i.e. not on the body surface of the light guide body.

In the case of a solid light guide, at least some of the reflecting features may comprise notches protruding from the body surface into the light guide body. Reflecting features may be cut or etched into the light guide body. The light guide including the notches may also be produced by injection moulding. Suitable shapes of reflecting features are, for example, disclosed in the European patent EP 0594089 B1 in paragraphs [0054] to [0060] and in Figures 1, 2a-d, 3a-c, 4a-b, 5a-b, 6a-b, 7, 8, and 11c. In case of a hollow light guide, reflecting features may, for example, comprise diffusely-reflecting dots on the inside of the light guide. In any case, reflecting features may be only present in one or more sections of the light guide body. Reflecting features may be spaced from each other in regular intervals or in intervals that are smaller, the further away the reflecting features are located from an end face through which light can enter the light guide. Suitable arrangements of reflecting features and their spacing are disclosed in the Figures 2-5 and the associated parts of the description of the European patent EP 0956472 B1, and in paragraphs [0018] to [0024] and Figures 1-3 and the associated parts of the description of the European patent EP 1153240 B1.

The light source is operable to introduce light into the light guide through the first end face. The light source may be arranged such that it introduces light into the light guide through the first end face. For example, the light source may be arranged adjacent to the first end face so that at least a part of the light it emits enters the light guide through the first end face. The light source may introduce light directly into the light guide, or it may introduce light into the light guide indirectly, for example after reflection on mirrors and/or after refraction in lenses. A further light source may be provided for introducing light into the light guide through the second end face. Suitable light sources include, for example, light-emitting diodes, fluorescent or incandescent lamps, and any type of lasers.

At least some of the light introduced by the light source into the light guide through the first end face propagates in the light guide. Light may propagate longitudinally from the first end face towards the second end face or vice versa. Light may propagate longitudinally from a reflecting feature towards the first or towards the second end face or vice versa. Light may, for example, propagate by total internal reflection or by specular reflection. Some of the light propagating in the light guide may hit a reflecting feature and may undergo reflection. Reflection on this reflecting feature may change its direction of propagation such that the light is reflected towards the body surface, is transmitted through the body surface and leaves the light guide. Some of the other light propagating along the light guide may not hit a reflecting feature and may thus propagate further towards an opposed end face, and may eventually leave the light guide through this opposed end face.

Light that is transmitted through the body surface of the light guide and leaves the light guide may propagate further in the ambient medium, e.g. air, gas, or water, around the light guide. Some of this transmitted light may hit an object. The object may scatter some of this light, specularly reflect some of it and/or absorb a portion of it. Some of the light may be scattered or reflected back from the object towards the light guide and may enter the light guide again through the body surface. Some of the light entering the light guide through the body surface may hit one of the reflecting features, which may reflect that light towards one or both of the end faces of the light guide. After this reflection, that light again propagates within the light guide. Some of this propagating light may propagate up to one of the end faces and leave the light guide through this end face. Some of the light leaving the light guide may hit a light detector.

A light detector is operable to, and arranged such that it can, detect light which leaves the light guide through the first and/or the second end face. The light detector may be arranged adjacent to the first or the second end face so that it can detect at least a part of the light leaving the light guide through the respective first or second end face. The light detector may be arranged such that it can detect light which leaves the light guide through the first end face, i.e. the end face through which the light source introduces light into the light guide. Both the light source and the light detector may be arranged adjacent to the first end face. If, however, a light guide is shaped such that, for example, the end faces are located next to each other, the light detector may be arranged such that it can detect light which leaves the light guide through the first end face and, at the same time, such that it can detect light which leaves the light guide through the second end face. Suitable light detectors include, for example, photodiodes, phototransistors, charge-coupled devices, photoresistors, bolometers, infrared photodetectors and ultraviolet photodetectors.

The light detector may be arranged such that it can detect light leaving the light guide in an indirect manner, for example after reflection of that light at a mirror or after refraction by a lens.

The light guide may be longitudinal, that is to say, in one direction (the "long" direction) it has a greater extension than in other directions. In this long direction, a longitudinal light guide has two opposed end portions.

The light guide may have a circular, oval, elliptic, mushroom-shaped, wedge-shaped, trapezoidal, rectangular or triangular cross section in at least one position along its extension between the end faces. A longitudinal light guide may have a circular, oval, elliptic, mushroom-shaped, wedge-shaped, trapezoidal, rectangular or triangular cross section. The shape of the cross section of the light guide may facilitate accommodation of the light guide in limited space. Light guides having a circular or a rectangular cross section may allow more cost-efficient production. Certain cross sections may be particularly suitable for use with specific shapes of reflecting features. The cross section of the light guide may vary over its extension between the end faces.

The light guide may have a tubular shape. A light guide having a tubular shape is longitudinal and has a circular cross section over its longitudinal extension. A light guide having a tubular shape may be hollow or solid. Light guides having tubular shapes are particularly cost-effective to produce.

The light guide may be solid. Solid light guides may be particularly rugged and may withstand mechanical forces without suffering damage. A solid light guide may comprise a liquid material, like, for example, water. It may comprise a semiliquid material, like, for example, a gel, or it may comprise a rigid material, like, for example, glass or a rigid polymeric material. A solid light guide may be rigid or flexible.

The light guide may be flexible. Flexible light guides may be easily brought into many different shapes and may thus be shaped for use in a specific application after their manufacturing. Flexible light guides may, for example, be conformable to irregular surfaces. Flexible light guides may allow the use of sensor devices in applications that require movement, like, for example, at hinges. They may also make their storage and transport more cost-effective, because they may, for example, be stored and shipped in a longitudinal shape, and brought into a different, more complicated shape only upon installation. A flexible light guide may be less prone to breaking and may thus have a longer usable life.

The light guide may comprise polyurethane, polycarbonate, polymethyl methacrylate (PMMA) or glass. These materials may provide a high transparency to visible light and may thus be particularly suitable for a solid light guide. Polyurethanes, polycarbonates, PMMAs and glass are readily available and allow cost-effective manufacturing of the light guide. Polyurethane may, for example, be used for manufacturing of flexible light guides. Polyurethane, PMMA, and polycarbonate may be advantageous in applications where durability and longevity are required.

The light guide may have a center line, which may follow a two-dimensional curve in space. A two-dimensional curve in space is a curve that lies in one geometrical plane. A center line is an imaginary line drawn between the first and the second end face, and which follows essentially the geometric center of the light guide along the extension of the light guide between the end faces. A two-dimensional shape allows for a flat arrangement of the light guide, and may thus save space in specific applications of the sensor device. A two-dimensional arrangement may allow creation of a so-called light curtain, which may allow detection of objects that cross or enter a part of the imaginary plane in which the light guide is disposed. At least a part of the center line may form essentially a U-shape, an O-shape, or an L-shape. These particular shapes of the light guide may allow for arrangements of the light guide wherein light emitted by a part of the light guide can enter back into the light guide through a different part of the light guide, thereby creating a "light barrier" between the two parts of the light guide. This arrangement may allow for a more reliable detection of dark, i.e. light-absorbing, objects by the sensor device, because an approach of the object may only cause a small amount of light to be reflected into the light guide, but the object may prevent a larger amount of light, previously emitted by the light guide, to re-enter the light guide in a different section, so that a change in the detector signal may be greater, and thus more reliable to detect.

The light guide may have a center line, which follows a three-dimensional curve in space. A three-dimensional curve in space is a curve that lies not only in one plane, but extends out of that plane into the third dimension. This arrangement permits an even more flexible application of the invention, since it may allow detection of objects entering into a defined space volume. Two longitudinal sections of a light guide may, for example, be arranged in a parallel manner with respect to each other, both parallel sections being arranged around the same cylindrical volume. In this arrangement, an object could be detected that enters the cylindrical volume enveloped by the light guide. An object entering the volume through the curved wall of the "cylinder" may be detected by light leaving one section of the light guide and entering the other section of the light guide. An object entering the volume through one of the end planes of the "cylinder" may be detected by light leaving one of the sections and entering the same section in a different location.

In general, the light guide may be shaped such that light reflected through the body surface to the outside of the light guide can enter the light guide through the body surface without being reflected at an object. It may be shaped such that light reflected through the body surface of a first section of the light guide to the outside of the light guide can enter the light guide through the body surface of a second, different section of the light guide without being reflected at an object. In particular, a longitudinal light guide may be shaped such that light reflected through the body surface of a first longitudinal section of the light guide to an outside of the light guide can enter the light guide through the body surface of a second, different longitudinal section of the light guide without being reflected at an object. These arrangements may allow to use light more efficiently and to operate the light source with less power. These arrangements may also increase the detection sensitivity of the sensor device.

The light source may be operable to emit visible light, ultraviolet light and/or infrared light. This may allow operation of the sensor device with different wavelength ranges of light. It may allow operation of the sensor device in an invisible mode, i.e. where the light is not visible to the human eye and thus the presence of a sensor is less noticeable. It may allow the operation of the sensor device in environments where visible light is undesirable. Infrared light may allow for a higher sensitivity of the sensor device. A light source emitting one wavelength range of light may permit the use of certain materials comprised in the light guide, which may be transparent to that one wavelength range of light, but not to other wavelength ranges of light.

The light detector may be operable to detect visible light, ultraviolet light and/or infrared light. This may again allow operation of the sensor device with different wavelength ranges of light or in an invisible mode, as described previously. It may allow the operation of the sensor device in environments where visible light is undesirable. Infrared light may allow for a higher sensitivity of the sensor device. A light detector operable to detect one wavelength range of light may permit the use of certain materials comprised in the light guide, which may be transparent to that one wavelength range of light, but not to other wavelength ranges of light. A light detector operable to detect one wavelength range of light may thereby suppress undesired contributions from other wavelength ranges of light, e.g. from visible ambient light entering the light guide. This again may increase the sensitivity of the sensor device.

The sensor device may comprise a further light detector, arranged such that the further light detector can detect light which leaves the light guide through the end face opposed to the end face in respect to which the first light detector is arranged such that the first light detector can detect light which leaves the light guide through that end face. The sensor device may comprise one or more further light detectors. A sensor device having two or more light detectors, arranged at the two end faces, may increase the sensitivity of the sensor device.

The reflecting features may comprise notches extending into the body of the light guide. Notches may extend from the body surface into the body of a solid light guide in a direction that is essentially perpendicular to the direction of the extension of the light guide between the end faces. Notches may have a wedged shape with the acute angle of the wedge being oriented towards the interior of the light guide. Wedge-shaped notches may have an imaginary plane of symmetry which goes through the tip having the acute angle, and divides the wedge in two identical halves. Reflecting features comprising notches may be easy to apply during manufacturing of a light guide and allow for cost effective production of light guides. Reflecting features comprising notches can be tailored for specific reflective properties by, for example, giving them particular depths, by which they protrude or extend into the body of the light guide, or by giving them a particular acute angle or by spacing the notches along the long direction of the light guide or by placing them on different locations on a circumference of a tubular light guide. The European patent EP 0956472 B1 discloses, for example in Figures 2 and 3 and the associated parts of the description, suitable geometries of notches and their arrangements and spacing for certain desirable distributions of light.

Reflecting features may be arranged and/or oriented such that they reflect a higher percentage of light entering the light guide through the body surface towards one of the end faces than towards the other of the end faces. This can be achieved, for example, by wedge-shaped notches that are oriented such that their plane of symmetry is not perpendicular to the center line of the light guide. Such arrangement and/or orientation of reflecting features may be advantageous in that they may reflect light preferentially to the end face of the light guide where the light detector is located, thereby increasing the sensitivity of the sensor device. In sensor devices, where a light detector is arranged at each end face, such a reflecting feature may reflect light entering the light guide preferentially towards the end face which is closer to the respective reflecting feature. This may increase the sensitivity of the sensor device.

The invention also provides a utility cabinet having a sensor device as described above installed therein. A utility cabinet may, for example, be a cabinet for distribution of electrical signals, gas, electricity, or water to end users. Such a utility cabinet may provide improved detection of intrusion, vandalism or tampering. In particular, a telecommunications cabinet may be called a utility cabinet. The invention provides a telecommunications cabinet having a sensor device as described above installed therein.

A sensor device as described above may be used for detecting access to an interior of a utility cabinet. Since many utility cabinets are located in public space, e.g. along the sides of streets, the cabinets can be targets of vandalism or attempts of tampering. The sensor device of the present invention may be used for surveillance of such cabinets by detecting intrusion and, upon detection, by triggering an alert. In particular, a sensor device as described above may be used for detecting access to an interior of a telecommunications cabinet.

A sensor device as described above may be used for detecting access to a glove box, a door pocket, a trunk or a cavity of a vehicle. The sensor device may, for example, detect access of a passenger's hand to a glove box, and cause the vehicle to illuminate the glove box. The sensor device may then sense the removal of the hand from the glove box and switch the illumination off. The sensor device may, for example, detect access of a person to the trunk of a car, and cause the vehicle to prevent automatic closure of the trunk while the person is present and a risk exists to injure the person by automatically closing the trunk.

A sensor device as described above may be used for illumination and sensing at the same time. Visible light reflected to the outside of the light guide of the sensor device may illuminate an object or a space. The sensor device may be adapted to cause the light source to emit more light in response to detection of an approach or a movement of an object. The sensor device may be adapted to cause the light source to emit less light in response to detection of an extraction or a removal of an object.

The invention will now be described in more detail with reference to the following

Figures exemplifying particular embodiments of the invention:
- Fig. 1: Schematic drawing of an embodiment of a sensor device according to the present invention;
- Fig. 2a: Schematic drawing of an embodiment of an alternative sensor device according to the invention, with no object present;
- Fig. 2b: Schematic drawing of the embodiment of Fig. 2a, with an object present;
- Fig. 3: Schematic drawing of an embodiment of a further sensor device according to the invention; and
- Fig. 4: Perspective drawing of an embodiment of a telecommunications cabinet according to the invention.

Herein below various embodiments of the present invention are described and shown in the drawings wherein like elements are provided with the same reference numbers.

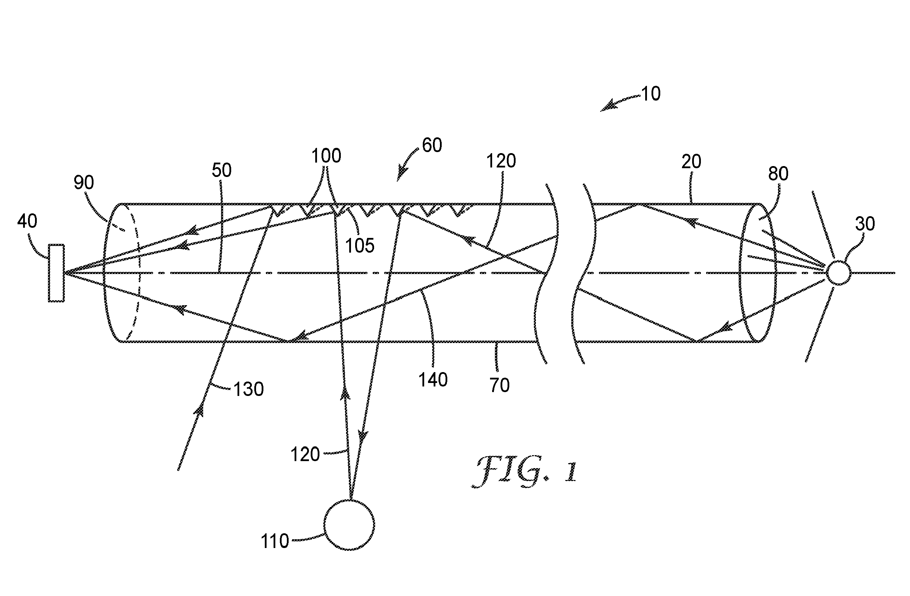

**Figure 1** is a schematic drawing of a first embodiment of the sensor device 10 according to the present invention. The sensor device 10 comprises a solid longitudinal light guide 20, a light source 30 and a light detector 40. The light guide 20 comprises a light guide body 60. The light guide 20 has a tubular shape and a circular cross section over its entire length. A center line 50 of the light guide 20 is the symmetry axis of the cylindrical tube forming the light guide body 60. The light guide body 60 is delimited by a body surface 70, a first end face 80 and a second end face 90. Both end faces 80, 90 are flat surfaces. The light guide body 60 has a plurality of reflecting features 100 extending from the body surface 70 into the light guide body 60. In this embodiment the light source 30 is arranged adjacent to the first end face 80 such that as much of the emitted light as possible enters the light guide 20. The light detector 40 is arranged adjacent to the second end face 90 so that it can detect as much of the light leaving the light guide 20 through the second end face 90.

A first amount of light, exemplified by light ray 120, is introduced by the light source 30 into the light guide 20 through the first end face 80, propagates through the light guide 20 and is reflected in the light guide body 60 by total internal reflection. Some of that light hits one or more of the reflecting features 100 which change the direction of the propagation such that some of the light is reflected towards the body surface 70 and leaves the light guide 20 through the body surface 70 to the outside of the light guide 20, where it propagates in ambient air. Some of the light reflected to the outside of the light guide 20 impinges on an object 110. Some of the light hitting the object 110 is scattered by the object 110 back towards the light guide 20. This scattered light enters the light guide 20 through the body surface 70, propagates transversely within the light guide 20 until it hits one or more of the reflecting features 100, which reflect at least a portion of that light towards the second end face 90 of the light guide 20. The light leaves the light guide 20 through the second end face 90 and impinges upon the light detector 40.

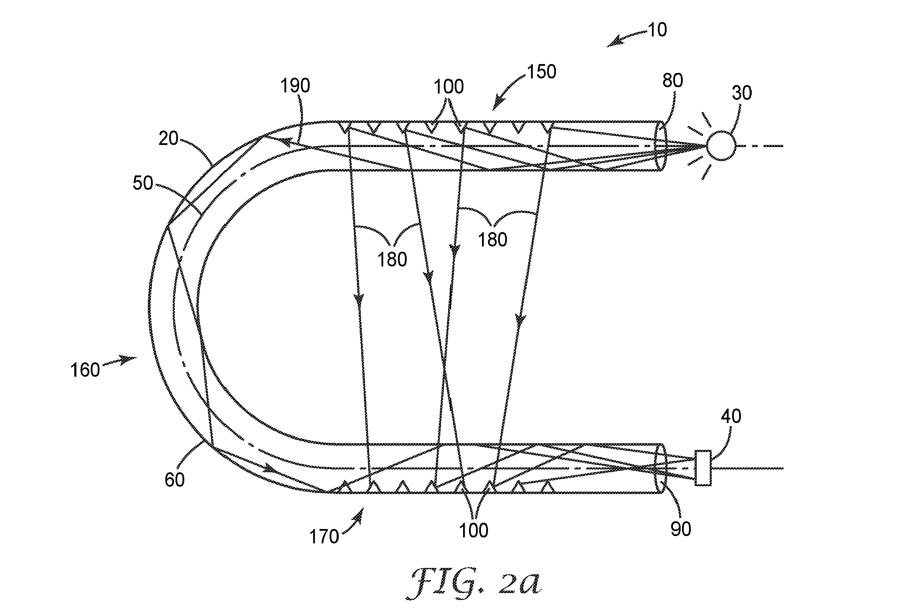

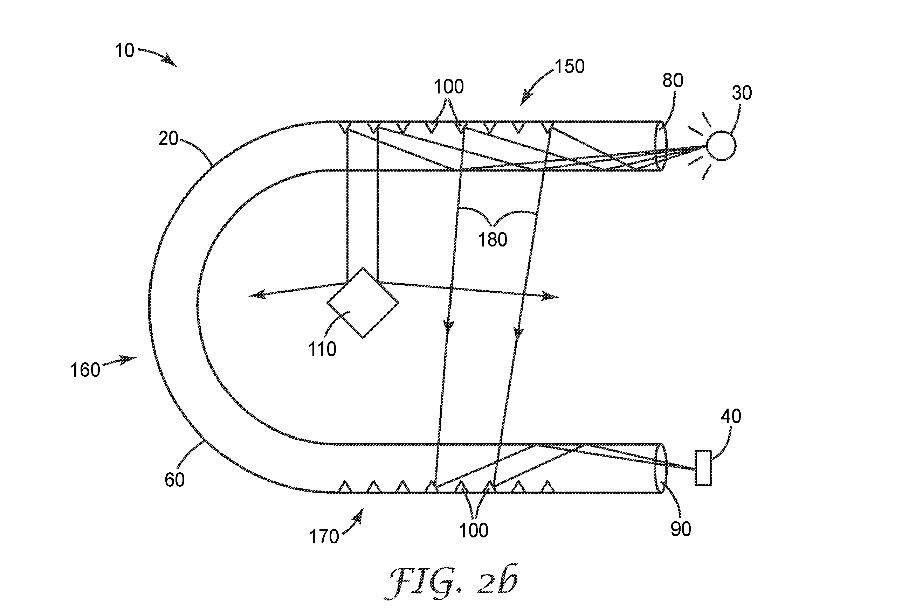

Light ray 130 represents a second amount of light that is ambient light that enters the light guide 20 through the body surface 70. This ambient light may originate from other light sources, such as the sun or a lamp. In the case of a U-shaped light guide 20 (such as the one shown in Figures 2a and 2b), a portion of the ambient light may also originate from the light source 30, being transmitted through the body surface 70 of the light guide and re-entering the light guide 20 through a different portion of the light guide 20 without being scattered or reflected by the object 110. That transmitted light re-enters the light guide 20 through the body surface 70, and a part of it is reflected by one or more reflecting features 100 towards the second end face 90, where it leaves the light guide 20 and hits the detector 40.

Light ray 140 represents a third amount of light that is introduced by the light source 30 into the light guide 20 through the first end face 80, propagates through the light guide 20 towards the second end face 90 through the light guide 20 without leaving the light guide 20, exits the light guide 20 through the second end face 90 and hits the detector 40.

In the embodiment shown in Figure 1, the light source 30 is a light-emitting diode ("LED") which emits visible white light. The light guide 20 is made of polyurethane which is highly transparent for visible light. The reflecting features 100 are wedge-shaped notches, cut into the light guide body 60. The reflecting features 100 are arranged parallel to each other on one circumferential side of the light guide body 60. The vertex line 105 of each wedge-shaped notch is perpendicular to the center line 50 of the light guide 20. Each notch is about 0.04mm deep, i.e., it penetrates into the light guide body 60 by about 0.04mm. The center-to-center spacing of the notches is about 2mm.

Each reflecting feature 100 of the light guide 20 reflects a certain amount of light out of the light guide 20. Hence, with increasing distance from the light source 30, the amount of light propagating in the light guide 20 decreases. For example, the fiftieth reflecting feature 100, as counted from the light source 30 in the direction towards the second end face 90, will "see" much less light propagating in the light guide 20 than the first reflective feature 100. If the reflecting features 100 are evenly spaced with respect to each other, more light will be reflected to the outside of the light guide 20 by reflecting features 100 in the section of the light guide 20, which is closer to the light source, than in a section which is further from the light source. In order to avoid this, the spacing of the reflecting features 100 can be chosen such that the amount of light reflected to the outside of the light guide 20 per centimetre of light guide length is approximately constant over the longitudinal extension of the light guide 20. In particular, the spacing between the reflecting features 100 diminishes with increasing distance from the end face 80 through which light emitted by the light source 30 enters the light guide 20 (not shown in Fig. 1).

**Figure 2a** is a schematic sketch of an alternative sensor device 10 according to the present invention. It is identical to the device 10 shown in Figure 1, except for the center line 50 of the light guide 20 forming a U-shape, and for reflecting features 100 being arranged in first and second straight sections 150, 170 of the light guide body 60. The center line 50 of the light guide 20 lies in one geometrical plane, i.e. the center line 50 follows a two-dimensional curve in space. The curved section 160 of the U-shaped light guide 20 comprises no reflecting features 100. The straight sections 150, 170 of the U-shaped light guide 20 are arranged in a plane and oppose each other. The reflecting features 100 are arranged on the circumference of the body surface 70 of the straight sections 150, 170 such that light in the light guide 20 can be reflected by the reflecting features 100 of the first straight section 150 and transmitted through the body surface 70 to the outside of the light guide 20 in a direction generally towards the opposing second straight section 170 of the light guide 20. Similarly, light in the light guide 20 can be reflected by the reflecting features 100 of the second straight section 170 through the body surface 70 to the outside of the light guide 20 in a direction generally towards the opposing first straight section 150 of the light guide 20.

Some of the light introduced by the light source 30 through the first end face 80 into the light guide 20 propagates longitudinally through the light guide body 60 and hits one or more of the reflecting features 100 in the first straight section 150 of the light guide 20, which is close to the first end face 80. Some of that light is reflected, travels transversely through the light guide 20 and is transmitted through the body surface 70 to the outside of the light guide 20 towards the opposed second straight section 170. If no object is present between the straight sections 150, 170, some of that light enters the light guide 20 through the body surface 70 of the second straight section 170, travels transversely through the light guide 20 until it impinges upon one or more of the reflecting features 100 of the second straight section 170, and is reflected at one or more of the reflecting features 100 to propagate longitudinally in the light guide 20 towards the second end face 90 and is detected by the detector 40. Light rays 180 are exemplary for that path of light.

If an object 110 is present between the straight sections 150, 170 of the light guide 20, as shown in **Figure 2b**, the object 110 scatters light emitted by the first straight section 150 into many directions, and less light will enter the second straight section 170, be reflected by the reflecting features 100 of that section, leave the light guide 20 through the second end face 90 and hit the detector 40.

Light scattered by the object 110 may also be scattered or reflected back towards the first straight section 150 of the light guide 20 and enter the light guide 20 through the body surface 70 of that section 150. The reflecting features 100 of that first straight section 150 reflect some of that light into longitudinal propagation within the light guide 20 towards the second end face 90. However, this light propagates through the light guide 20 for a long distance, is reflected a number of times by total internal reflection, and a part of it is absorbed, over that long distance, by the light guide material. Hence only a fraction of the light originally introduced into the light guide 20 at the first end face 80 leaves the light guide 20 through the second end face 90 and hits the detector 40. The net effect of an object 110 present between the straight sections 150, 170 of the light guide 20 is therefore less light hitting the detector 40 and consequentially a lower output signal of the light detector 40, as compared to the signal without this object 110 being present. This effect is different from the effect in the first embodiment, i.e. the straight light guide 20 shown in Figure 1, where the presence of an object 110 in the vicinity of the light guide 20 resulted in more light hitting the detector 40 and a higher detector signal.

For the sake of completeness, it is noted that the detector 40 also receives other light, like, for example, light emitted by the light source 30, that propagates uninterrupted longitudinally through all sections 150, 160, 170 of the light guide 20 without hitting any of the reflecting features 100, and eventually leaves the light guide 20 through the second end face 90. Light ray 190 in Figure 2a is exemplary for this path of light. Light ray 190 may, after a long journey through the light guide 20, hit a reflecting feature 100 of the second straight section 170, be reflected towards the first straight section 150, and be reflected towards the second end face 90. However, its contribution to the detector signal is small, because its intensity has decreased with the number of reflections and with absorption by the light guide material on its long path through the light guide 20. The detector 40 also receives ambient light entering the light guide 20 through the body surface 70, which is reflected by reflecting features 100 of one of the straight sections 150, 170 towards the second end face 90.

It may be contemplated arranging reflecting features 100 also in the curved section 160 of the light guide 20, so that light is emitted into the space enclosed by the U-shaped light guide 20. An object 110 in that space and the vicinity of that section 160 of the light guide 20 would thereby be more reliably detected, since light emitted by those additional reflecting features 100 in the curved section 160 might be scattered or reflected towards one of the straight sections 150, 170 and result in a more distinct detector signal.

An embodiment of a sensor device 10 as described with respect to Figures 2a and 2b may be usable in window frames of a car. A U-shaped light guide 20 may be arranged along the upper inner edge and the two vertical inner edges of a car window frame, such that the light guide 20 creates a light curtain. If an object 110, for example a hand or a head of a car passenger, is detected in the space delimited by the segments 150, 160, 170 of the light guide 20, operation of an automatic power window actuator is inhibited such that the car window will not be lifted into a closed position. This can prevent injury of the passenger. The sensor device according to the invention may also be used to detect an object approaching a glove compartment or a luggage compartment of a car.

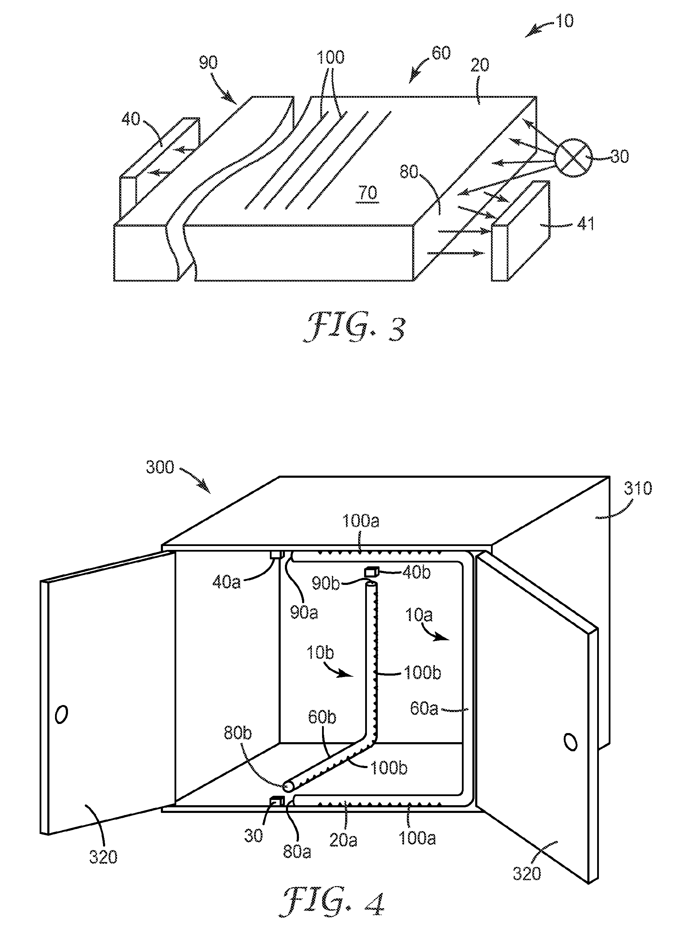

**Figure 3** is a functional perspective sketch of a further sensor device 10 according to the invention. It is identical to the device 10 of Figure 1, except for the light guide 20 having a rectangular cross section over its entire length, and for a further light detector 41 being arranged such that it can detect light which leaves the light guide 20 through the first end face 80. Both the light source 30 and the further light detector 41 are thus arranged next to the first end face 80 of the light guide 20. The reflecting features 100 are arranged on the upper one of the wider sides of the rectangular light guide 20. Light can enter the light guide 20 through the body surface 70 on the opposite, lower one of the wider sides of the light guide 20. Some of that light is reflected by the reflecting features 100 towards the second end face 90, some towards the first end face 80. The further light detector 41 permits detection of light leaving the light guide 20 through the first end face 80. By taking into account the signal of both light detectors 40, 41, the overall sensitivity of the sensor device 10 can be improved.

In **Figure 4**, a telecommunications cabinet 300 according to the invention is shown in a perspective sketch. The cabinet 300 has two sensor devices 10a, 10b as described above installed within the cabinet. The telecommunications cabinet 300 has a housing 310 and two doors 320. The cabinet 300 is shown empty, before any telecommunications equipment is installed in it. The first sensor device 10a comprises a U-shaped solid tubular light guide 20a having a first end face 80a, a second end face 90a, and a body 60a. This light guide 20a is similar to the one of Figure 2. The body 60a comprises reflecting features 100a in two opposed longitudinal sections of the light guide 20a, the sections being oriented parallel to each other. The reflecting features 100a are arranged on the body of the light guide 20a such that the light guide 20a emits light into the space enveloped by the light guide 20a. A light source 30 introduces light into the light guide 20a through the first end face 80a of the light guide 20a. A first light detector 40a is arranged such that it can detect light which leaves the light guide 20a through the second end face 90a. The first sensor device 10a is arranged in a plane, its light guide 20a is arranged around a part of the front door opening of the cabinet 300. The light guide 20 thereby creates a light curtain between those two of its straight sections comprising the reflecting features 100a, so that an object 110 passing through the plane of the light guide 20a causes a change of the amount of light leaving the light guide 20a through the second end face 90, which in turn causes a change in the signal output of the detector 40a. The sensor device 10a is thus used to detect access to the interior of the telecommunications cabinet 300 through the righthand part (in Figure 4) of the front door opening.

A second sensor device 10b according to the invention is installed in the telecommunications cabinet 300. It comprises the light source 30, a light detector 40b and a tubular light guide 20b which forms an L-shape. The light source 30 introduces light both into the light guide 20a of the first sensor device 10a and into the light guide 20b of the second sensor device 10b. Alternatively, two separate light sources 30 might be employed, one of which introduces light into the light guide 20a of the first sensor device 10a, the other one of which introduces light into the light guide 20b of the first sensor device 10b. The light guide 20b is arranged on the bottom surface of the cabinet 300 and extends upwards along the back wall of the cabinet 300. The light guide 20b comprises a first end face 80b and a second end face 90b and a light guide body 60b extending between the end faces 80b, 90b. The light detector 40b is arranged adjacent to the second end face 90b, such that it can detect light which leaves the light guide 20b through that second end face 90b. The light guide body 60b comprises reflecting features 100b on both sections of the L-shaped light guide 20b. The reflecting features 100b are arranged on the light guide body 60b in a manner such that light is reflected to the outside of the light guide 20b generally in the plane of the L-shaped light guide 20b and into the space bordered by the two sections of the L-shaped light guide 20b. Any object 110 entering the space enclosed by the two sections of the light guide 20b causes a change in the amount of light received by the light detector 40b and therefore a change in the detector signal. The second sensor device 10b is thus also used for access control to a part of the interior of the telecommunications cabinet 300, namely to the part of the bottom right corner portion of the cabinet 300.

The signals of the respective light detectors 40a, 40b will also change when a door 320 of the telecommunications cabinet 300 is opened and daylight comes in. However, electronic solutions exist for the control of the light source 30 and the light detectors 40a, 40b to eliminate this effect, for example by a phase-locked loop detector.

Further to the embodiments of the invention which are shown in the Figures, it is contemplated to use the sensor device 10 for illumination and sensing at the same time. Visible light reflected to the outside of the light guide 20 may illuminate an object 110 or a space for the object or the space to be visible. When no object is detected, the sensor device 10 may illuminate objects or space in its vicinity with a specific illumination intensity, e.g. a low intensity. Upon detection of approach or movement of an object, the sensor device 10 may increase the illumination intensity by causing the light source 30 to emit more light, so that more light enters the light guide 20 and more light leaves the light guide 20 through the body surface 70 of the light guide 20 towards the outside of the light guide 20 and illuminates any objects or space in the vicinity of the light guide 20. Upon detection of extraction or removal of an object, the sensor device 10 may decrease the illumination intensity by causing the light source 30 to emit less light, so that less light enters the light guide 20 and less light leaves the light guide 20 through the body surface 70 of the light guide 20 towards the outside of the light guide 20 and illuminates any objects or space in the vicinity of the light guide 20. Illuminating objects or space in the vicinity of the light guide 20 with a low light intensity, when no object 110 is detected, illuminating with a higher intensity when an object 110 is detected, and reducing intensity again when the object 110 is removed, may create an aesthetically pleasing visual effect, and/or save energy. Possible applications of such sensor devices are automobile door pockets or automobile glove compartments.

Another possible application is in production environments, where the sensor device 10 may be arranged such that visible illumination can be used to indicate a location of, for example, a drawer containing certain parts that are to be used in a specific production step. The sensor device 10 detects the approach of a hand of an operator who manually takes out a part from that drawer. A signal indicating the detection is sent to a central computer, where the approach is recorded. Illumination of that drawer is then switched off, and another drawer is illuminated which contains a part which is to be assembled next. In this embodiment, the sensor device 10 of the present invention is used in a dual function: it indicates a location through visible illumination, and detects approach, extraction or movement of the hand of a person.

## Claims

1. Sensor device (10), comprising
a) a light guide (20) having a light guide body (60) extending between opposed first and second end faces (80, 90), the light guide body (60) having a body surface (70) and reflecting features (100) formed in at least a portion of the light guide body (60),
wherein the light guide (20) is operable to reflect, by at least one of the reflecting features (100), light in the light guide (20) through the body surface (70) to an outside of the light guide (20), and operable to reflect, by at least one of the reflecting features (100), light entering the light guide (20) through the body surface (70) towards one or both of the end faces (80, 90),
b) a light source (30), operable to introduce light into the light guide (20) through the first end face (80), and
c) a light detector (40),
**characterized in**
**that** the light detector (40) is arranged such that it can detect light which leaves the light guide (20) through one of the first and the second end faces (80, 90) of the light guide (20).

2. Sensor device (10) according to claim 1, wherein the light guide (20) is longitudinal.

3. Sensor device (10) according to any one of the preceding claims, wherein the light guide (20) has a circular, oval, elliptic, mushroom-shaped, wedge-shaped, trapezoidal, rectangular or triangular cross section in at least one position along its extension between the end faces (80, 90).

4. Sensor device (10) according to any one of the preceding claims, wherein the light guide (20) is solid.

5. Sensor device (10) according to any one of the preceding claims, wherein the light guide (20) is flexible.

6. Sensor device (10) according to any one of the preceding claims, wherein the light guide (20) comprises polyurethane, polycarbonate, polymethyl methacrylate or glass.

7. Sensor device (10) according to any one of the preceding claims, wherein the light guide (20) has a center line (50), and wherein at least a part of the center line (50) forms essentially a U-shape, an O-shape or an L-shape.

8. Sensor device (10) according to any one of the preceding claims, wherein the light guide (20) is shaped such that light reflected through the body surface (70) to an outside of the light guide (20) can enter the light guide (20) through the body surface (70) without being reflected at an object (110).

9. Sensor device (10) according to any one of the preceding claims, wherein the light source (30) is operable to emit visible light, ultraviolet light or infrared light.

10. Sensor device (10) according to any one of the preceding claims, comprising a further light detector (41), arranged such that the further light detector (41) can detect light which leaves the light guide (20) through the end face (80, 90) opposed to the end face (80, 90) in respect to which the first light detector (40) is arranged.

11. Sensor device (10) according to any one of the preceding claims, wherein the reflecting features (100) comprise notches extending into the body (60) of the light guide (20).

12. Sensor device (10) according to any one of the preceding claims, wherein at least some of the reflecting features (100) are arranged and/or oriented such that they reflect a higher percentage of light entering the light guide (20) through the body surface (70) towards one of the end faces (80, 90) than towards the other of the end faces (80, 90).

13. Telecommunications cabinet (300), having a sensor device (10) according to any one of the preceding claims installed therein.

14. Use of a sensor device (10) according to any one of claims 1 to 12 for detecting access to an interior of a telecommunications cabinet (300).

15. Use of a sensor device (10) according to any one of claims 1 to 12 for detecting access to a glove box, a door pocket, a trunk or a cavity of a vehicle.
